# EUROPÄISCHE PATENTSCHRIFT

(11) **EP 1 897 735 B1**
(45) Veröffentlichungstag und Bekanntmachung des Hinweises auf die Patenterteilung: **26.12.2012**
(21) Anmeldenummer: 07015436.4
(22) Anmeldetag: 07.08.2007
(51) Int. Cl.: B60J 7/20, B60J 7/185

(54) **Fahrzeugdach**
Vehicle roof
Toit de véhicule

(30) Priorität: 08.09.2006 DE 102006042203
(43) Veröffentlichungstag der Anmeldung: 12.03.2008
(73) Patentinhaber: Dr. Ing. h.c. F. Porsche AG, 70435 Stuttgart (DE)
(72) Erfinder: Schulz, Lars, 15566 Schöneiche (DE); Hermann, Felix, 71229 Leonberg (DE); Beierl, Dominik, 70825 Korntal-Münchingen (DE)

(56) Entgegenhaltungen:
- WO-A1-2005/084982
- DE-A1-102004 005 882
- FR-A1- 2 791 007
- US-A- 2 602 692
- US-A1- 2005 218 690

## Beschreibung

Die Erfindung betrifft ein Fahrzeugdach gemäß Oberbegriff des Patentanspruchs 1.

Aus der DE 10 2004 005 882 A1 ist ein Fahrzeugdach bekannt, das eine flexible Dachhaut und zumindest zwei seitliche Dachrahmen aufweist, die jeweils Querspriegel aufweisen, so dass in Schließstellungdes Fahrzeugdachs die Dachhaut zumindest bereichsweise abgestützt ist. Die beiden Dachrahmen sind über mindestens zwei Lenkerpaare zwangsgesteuert von einer geschlossenen Verdeckposition in eine fixierte Verdeckablageposition und umgekehrt verlagerbar, wobei ein Lenkerpaar zur Verdeckbewegung aller Dachteile motorisch antreibbar ist. In der Verdeckablageposition ist das angetriebene Lenkerpaar durch einen am Verdecklager angebrachten karosserieseitigen Anschlag auf jeder Fahrzeugseite zur Fixierung aller Dachteile unter Einhaltung definierter Abstände zumindest zwischen den mindestens zwei Lenkerpaaren abstützbar.

Aus DE 195 33 802 C1 ist ein Verdeck für ein Cabriolet-Fahrzeug bekannt. Dabei wird ein abgelegtes Verdeck karosserieseitig fixiert, wobei ein Verschlusshaken im Bereich der Dachnase mit einem Gegenelement in Eingriff kommt. Der Verschlusshaken dient gleichzeitig auch zur Verriegelung des geschlossenen Verdeckes im Bereich eines Windschutzscheibenrandes.

Der Erfindung liegt die Aufgabe zugrunde, ein Fahrzeugdach mit den Merkmalen des Oberbegriffes des Anspruches 1 derart auszubilden, dass das Verdeckgestell in abgelegter Stellung so fixiert ist, dass die Lenker des Verdeckgestells in einer definierten beabstandeten Position gehalten werden, Freiräume für die Verdeckhaut sichergestellt werden und dabei keine Spriegel auf dem Verdeckstoff zum Liegen kommen, wobei infolge von Abscheuerungen oder Druckstellen auf einem Verdeckstoff sichtbar würden.

Diese Aufgabe wird durch die kennzeichnenden Merkmale des Anspruches 1 gelöst, vorteilhafte Weiterbildungen ergeben sich aus den Unteransprüchen 2 bis 10.

In Verdeckablageposition ist das angetriebene Lenkerpaar durch einen ersten karosserieseitigen Anschlag auf jeder Fahrzeugseite zur Fixierung aller Dachteile unter Einhaltung definierter Abstände zumindest zwischen den mindestens zwei Lenkerpaaren abstützbar. Die Erfindung erzielt damit mit mehreren, insbesondere einstellbaren, karosserieseitigen Anschlägen (Paare) eine Mehrzahl von Vorteilen. Durch das Zusammenwirken des karosserieseitigen Anschlages mit gerade dem Lenkerpaar dessen Bewegung die anderen Lenkerpaare und Elemente des Fahrzeugdaches zwangssteuert, wird eine Gesamtabstützung des Fahrzeugdaches erreicht, die sämtliche Dachgestellteile in einer definierten Ablagebewegung fixiert. Insbesondere ein "Zusammenfallen" des Verdeckgestells nach Überführung in eine Ablageposition ist nicht zu befürchten. Da auf jeder Fahrzeugseite, die beiden Lenkerpaare auf Abstand gehalten werden, kann ein motorischer Antrieb mit definierter Kraft und definierten Zugwinkeln an den Dachelementen angreifen und eine sichere Überführung des abgelegten Daches in eine Schließstellung bewirken. Erfindungsgemäß ist ein zweiter Anschlag vorgesehen, der das vorderste Dachsegment oder ein dem vorderen nachgeordnetes weiteres Dachsegment in Ablageposition abstützt. Insbesondere ist eine Abstützung der Dachnase von unten durch einen karosseriefesten zweiten Anschlag vorgesehen, wobei die Mehrzahl von Anschlägen zu einer noch besser definierten Lage der Gestellteile in Ablageposition führt. Der zweite Anschlag kann beispielsweise in ein Überrollschutzsystem integriert werden und je nach Art und Ausführungsform des Überrollschutzsystems entweder mittig oder jeweils im Bereich hinter einem Sitzlehnenpaar angeordnet werden. Weiterhin ist erfindungsgemäß ein dritter Anschlag vorgesehen, der in Form eines Puffers ein in Ablagestellung befindliches Dachsegment z.B. von oben und/oder von der Seite her beaufschlagt. Durch die Ausbildung einer derartigen Mehrpunktabstützung des abgelegten Daches unter Vorsehen einer Höhenverstellung mindestens eines Anschlages oder Anschlagpaares ist es möglich, das abgelegte Dach so zu fixieren, dass im Dachgestell eine gewisse Eigenspannung erzeugt wird. Dadurch wird ein Klappern vermieden und nach Lösung des dritten Anschlages, der in seiner Beaufschlagungsrichtung wenigstens entgegen der Beaufschlagungsrichtung des ersten oder des zweiten Anschlages gerichtet ist, eine erste Öffnungsbewegung ausgelöst, bevor die Stellkraft des Motors über die Gestängeteile auf das Dach einwirkt. Die Einstellbarkeit der Anschläge macht es außerdem problemlos möglich, gewisse Fertigungstoleranzen des Verdeckgestells oder seiner Lagerung auszugleichen. Der dritte Anschlag kann in einer vorteilhaften Ausführungsform auf der Innen-oder Unterseite eines Verdeckkasten- oder Heckdeckels angeordnet werden. Die Lenkerpaare des Dachgestells bilden wenigstens ein Viergelenk, das im abgelegten Zustand zwischen wenigstens zwei der Anschläge in verspannter Stellung einliegt. Durch eine derartige lösbare Fixierung des Viergelenkes werden auf einfache weise sämtliche beweglichen Dachgestängeteile festgehalten.

Eine weitere vorteilhafte Ausführungsform ergibt sich dann, wenn wenigstens das vorderste Dachteil als starre Dachschale ausgebildet ist und diese in Verdeckablageposition von dem zweiten und dem dritten Anschlag unter Ausübung einer Scherkraft auf das Verdeckgestell fixierend beaufschlagt wird. Auch mit einer derartigen Halterung lässt sich durch die Beaufschlagung des vordersten Dachteils mittels der Anschläge eine einfache und wirkungsvolle Fixierung des gesamten Verdeckgestänges nebst Dachsegmenten erreichen.

Die Erfindung ist anhand von Ausführungsbeispielen in den Zeichnungsfiguren näher erläutert. Diese zeigen:
- Fig. 1: eine schematische Darstellung eines bewegbaren Fahrzeugdaches in geschlossener Verdeckposition;

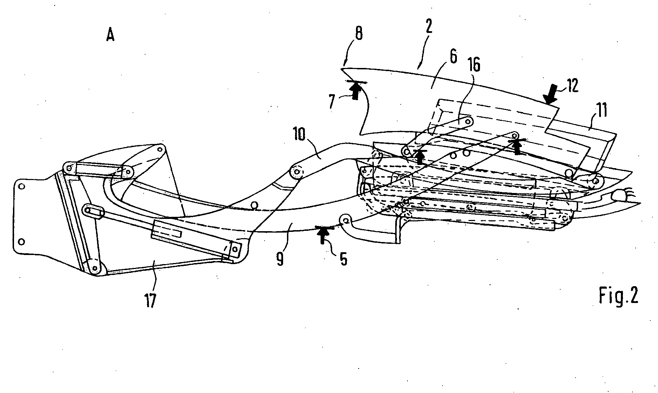

- Fig. 2: eine schematische Darstellung eines bewegbaren Fahrzeugdaches in Verdeckablageposition;
- Fig. 3: eine vereinfachte schematische Darstellung eines bewegbaren Fahrzeugdaches gemäß Fig. 2.

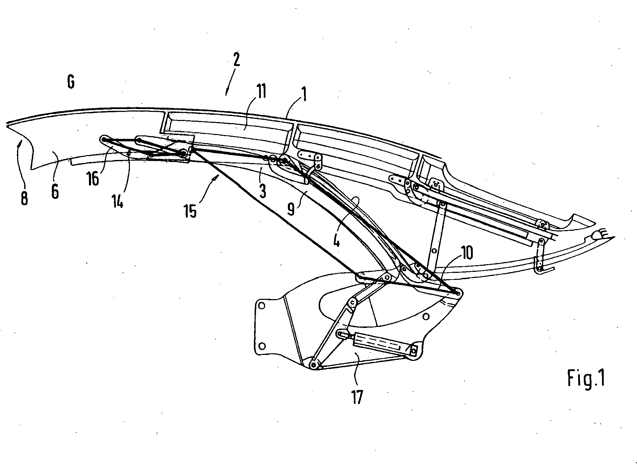

Figur 1 zeigt ein bewegbares Fahrzeugdach, bestehend aus vier in Schließstellung eine flexible Dachhaut 1 zumindest bereichsweise abstützenden Dachsegmenten 2, die über zwei Lenkerpaare 3, 4 zwangsgesteuert von einer geschlossenen Verdeckposition G in eine fixierte Verdeckablageposition A und umgekehrt verlagerbar sind, wobei ein Lenkerpaar 3 zur Verdeckbewegung aller Dachteile 1, 2, 3, 4 motorisch angetrieben wird. Die zwei Lenkerpaare 3, 4 sind mit einem Hauptlager 17 gelenkig verbunden. In Zeichnungsfigur 2 ist das Fahrzeugdach in Verdeckablageposition A dargestellt, dabei ist das angetriebene Lenkerpaar 3 durch einen ersten karosserieseitigen Anschlag 5 auf jeder Fahrzeugseite abgestützt. Durch diese Maßnahme werden sämtliche Dachteile 1, 2, 3, 4 unter Einhaltung definierter Abstände zumindest zwischen den zwei Lenkerpaaren 3, 4 fixiert. Die Fixierung der Dachhaut 1 in Ablageposition A ist als spannungsfreie Ablage zu verstehen.

Zur detaillierten Erläuterung wird auf Zeichnungsfigur 3 Bezug genommen, da diese aus Gründen der Übersichtlichkeit nur die grundlegenden Elemente des erfindungsgemäßen Fahrzeugdaches vereinfacht wiedergibt. Das in geschlossener Verdeckposition G vorderste Dachsegment 6 wird durch den zweiten Anschlag 7 abgestützt. Der zweite Anschlag 7 ist karosseriefest ausgebildet und kann beispielsweise in ein Überrollschutzsystem (nicht dargestellt) integriert sein.

Vorzugsweise ist der zweite Anschlag 7 im Bereich hinter dem Sitzlehnenpaar angeordnet. Das vorderste Dachsegment 6 wird von dem zweiten Anschlag 7 an seinem vorderen Bereich, der Dachnase 8, untergriffen.

In der bevorzugten Ausführungsform umfasst das Fahrzeugdach zwei Lenkerpaare 3, 4, die als Dachlenkerpaar 9 und Stützlenkerpaar 10 ausgebildet sind, wobei das Dachlenkerpaar 9 zumindest mit dem vordersten Dachsegment 6 und das Stützlenkerpaar 10 mit dem den vordersten Dachsegment 6 nachgeordneten Dachsegment 11 verbunden ist. Dabei wird das Stützlenkerpaar 10 indirekt über das motorisch angetriebene Dachlenkerpaar 9 angetrieben. Das Dachlenkerpaar 9 ist mit dem vordersten Dachsegment 6 und zugleich mit dem zweiten Dachsegment 11 gelenkig verbunden, so dass beispielsweise bei der Schließbewegung des Fahrzeugdaches eine Zugkraft ausgehend von dem Dachlenkerpaar 9 über das zweite Dachsegment 11 auf das Stützlenkerpaar 10 übertragen wird und dadurch das Stützlenkerpaar 10 indirekt angetrieben wird.

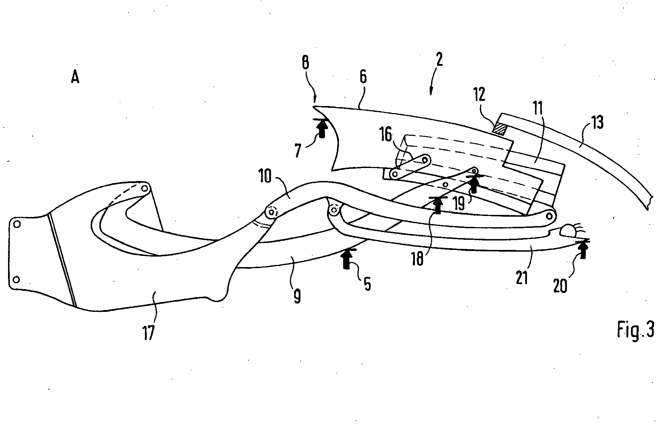

Des weiteren ist ein dritter Anschlag 12 vorgesehen, der in Form eines Puffers ein Dachsegment 2, 6, 11 von oben her beaufschlagt. In der in Zeichnungsfigur 3 dargestellten Ausführungsform wird das vorderste Dachsegment 6 von dem dritten Anschlag 12 beaufschlagt. Wenn das vom dritten Anschlag 12 in Verdeckablageposition A beaufschlagte Dachsegment 2 nicht vollständig von einer Dachhaut 1 (in Fig. 3 nicht dargestellt) überzogen ist, ist es zweckmäßig, den dritten Anschlag 12 derart zu platzieren, dass dieser einen Bereich des Dachsegmentes 2 beaufschlagt, an dem keine flexible Dachhaut 1 angeordnet ist. Beispielsweise beaufschlagt der dritte Anschlag 12 seitliche, nicht mit der flexiblen Dachhaut 1 überzogene Dachrahmenseitenteile zur Fixierung des Fahrzeugdaches in Verdeckablageposition A.

Ferner ist in der dargestellten Ausführungsform der dritte Anschlag 12 auf der Innenseite eines Verdeckkastendeckels 13 angeordnet. Ebenso wäre aber auch eine Anordnung des dritten Anschlages 12 im randseitigen Bereich des Verdeckkastendeckels 13 möglich. Bei einem Fahrzeug ohne Verdeckkastendeckel 13 könnte diese Funktion auch über einen Heckdeckel (nicht dargestellt), der an seinem in Fahrzeuglängsrichtung nach vorne weisenden Ende einen Puffer aufweist und bei Verdeckablage eine Relativbewegung zum Fahrzeugdach ausführt, realisiert werden.

Sowohl zum Ausgleich von Fertigungstoleranzen, als auch zur gezielten Verspannung der Dachsegmente 2 in Verdeckablageposition A ist zumindest einer der Anschläge 5, 7, 12 in seiner Höhe einstellbar. Ein derartiger in der Höhe einstellbarer Anschlag kann beispielsweise als Pufferelement mit einer Gewindestange ausgebildet sein, die über eine Kontermutter karosserieseitig und höhenfixierbar ist.

Aus Zeichnungsfigur 1 sind zwei Viergelenke 14, 15 erkennbar. Das erste Viergelenk 14 setzt sich aus den Hebeln des oberen Bereiches des Dachlenkers 9, einem Teilbereich des vordersten Dachsegmentes 6, dem Koppellenker 16, und einem Teilbereich des zweiten Dachsegmentes 11 zusammen, wobei die beiden Dachsegmente 6, 11 jeweils mit dem Dachlenker 9 als auch jeweils mit dem Koppellenker 16 gelenkig verbunden sind. Das zweite Viergelenk 15 setzt sich aus den Hebeln eines überwiegenden Bereiches des Dachlenkers 9, einem Teilbereich des zweiten Dachsegmentes 11, dem Stützlenker 10 sowie einem Teilbereich des Hauptlagers 17 zusammen. In Verdeckablageposition A wird zumindest eines der Viergelenke 14, 15 zwischen wenigstens zwei Anschlägen 5, 7, 12 in eine verspannte Stellung gebracht.

In der bevorzugten Ausführungsform ist das vorderste Dachsegment 6 als starre Dachschale ausgebildet und wird in Verdeckablageposition A von dem zweiten 7 und dem dritten Anschlag 12 unter Ausübung einer Scherkraft auf das Verdeckgestell fixiert. Wie aus Zeichnungsfigur 3 ersichtlich ist, wird das vorderste Dachsegment 6 vorderseitig von dem zweiten Anschlag 7 abgestützt und gleichzeitig an seinem hinteren Ende von oben durch den dritten Anschlag 12 nach unten gedrückt. Die vom dritten Anschlag 12 ausgehende, nach unten gerichtete Kraft wird durch das Eigengewicht des Verdeckkastendeckels 13 verursacht. Darüber hinaus kann es vorgesehen sein, die nach unten gerichtete Kraft des dritten Anschlages 12 durch einen aktiv in Schließposition gehaltenen - vorgespannten - Verdeckkastendeckel 13 zu verstärken.

Es liegt im Rahmen der Erfindung, die Wirkung der ersten bis dritten Anschläge durch vierte 18, fünfte 19 und einen sechsten Anschlag 20 zu unterstützen, die auf das Dachlenkerpaar 9 oder Stützlenkerpaar 10 oder einen Spannbügel 21 einwirken, was den Anschlag 20 anbelangt. Auch die Anschläge 18, 19 und 20 können höhenverstellbar ausgebildet sein.

### Bezugszeichenliste

1 Dachhaut
2 Dachsegment
3 Lenkerpaar direkt angetrieben
4 Lenkerpaar indirekt angetrieben
5 erster Anschlag
6 vordersten Dachsegment
7 zweiter Anschlag
8 Dachnase
9 Dachlenkerpaar
10 Stützlenkerpaar
11 zweites Dachsegment
12 dritter Anschlag
13 Verdeckkastendeckel
14 Viergelenk
15 Viergelenk
16 Koppellenker
17 Hauptlager
18 vierter Anschlag
19 fünfter Anschlag
20 sechster Anschlag
21 Spannbügel
G geschlossene Verdeckposition
A Verdeckablageposition

## Patentansprüche

1. Fahrzeugdach, bestehend aus mindestens zwei in Schließstellung eine flexible Dachhaut (1) zumindest bereichsweise abstützenden Dachsegmenten (2), die über mindestens zwei Lenkerpaare (3, 4) zwangsgesteuert von einer geschlossenen Verdeckposition (G) in eine fixierte Verdeckablageposition (A) und umkehrbar verlagerbar sind, wobei ein Lenkerpaar (3) zur Verdeckbewegung aller Dachteile (1, 2, 3, 4) motorisch antreibbar ist, und wobei in Verdeckablageposition (A) das angetriebene Lenkerpaar (3) durch einen ersten karosserieseitigen Anschlag (5) auf jeder Fahrzeugseite zur Fixierung aller Dachteile (1, 2, 3, 4) unter Einhaltung definierter Abstände zumindest zwischen den mindestens zwei Lenkerpaaren (3, 4) abstützbar ist, **dadurch gekennzeichnet, dass** ein zweiter Anschlag (7) das vorderste Dachsegment (6) oder ein dem letzten vorgeordnetes und sich dem ersten anschließendes Dachsegment (11) in Verdeckablageposition (A) abstützt, dass ein dritter Anschlag (12) vorgesehen ist, der in Form eines Puffers ein Dachsegment (2) von oben und/oder seitlich beaufschlagt, und dass die Lenkerpaare (3, 4, 9, 10) ein wenigstens ein Viergelenk (14, 15) umfassendes Dachgestell bilden, das Im abgelegten Zustand zwischen wenigstens zwei der Anschläge (5, 7, 12) in verspannter Stellung einliegt.

2. Fahrzeugdach nach Anspruch 1, **dadurch gekennzeichnet, dass** der zweite Anschlag (7) karosseriefest ausgebildet ist.

3. Fahrzeugdach nach Anspruch 2, **dadurch gekennzeichnet, dass** der zweite Anschlag (7) in ein Überrollschutzsystem integriert ist.

4. Fahrzeugdach nach einem der vorhergehenden Ansprüche, **dadurch gekennzeichnet, dass** der zweite Anschlag (7) entweder mittig oder paarweise jeweils im Bereich hinter einem Sitzlehnenpaar angeordnet ist.

5. Fahrzeugdach nach Anspruch 3, **dadurch gekennzeichnet, dass** der zweite Anschlag (7) eine Dachnase (8) untergreift.

6. Fahrzeugdach nach Anspruch 1, **dadurch gekennzeichnet, dass** die Lenkerpaare (3, 4) als Dachlenkerpaar (9) und Stützlenkerpaar (10) ausgebildet sind und das Stützlenkerpaar (10) indirekt über das Dachlenkerpaar (9) angetrieben ist.

7. Fahrzeugdach nach Anspruch 1, **dadurch gekennzeichnet, dass** der dritte Anschlag (12) einen nicht mit der flexiblen Dachhaut (2) versehenen Bereich des Fahrzeugdaches beaufschlagt.

8. Fahrzeugdach nach Anspruch 1 oder 7, **dadurch gekennzeichnet, dass** der dritte Anschlag (12) auf der Innen- oder Randseite eines Verdeckkasten (13) und/oder Heckdeckels angeordnet ist.

9. Fahrzeugdach nach Anspruch 1, **dadurch gekennzeichnet, dass** der erste Anschlag (5), der zweite Anschlag (7) und/oder der dritte Anschlag (12) zumindest in seiner Höhe einstellbar ist/sind.

10. Fahrzeugdach nach Anspruch 1, **dadurch gekennzeichnet, dass** wenigstens das vorderste Dachsegment (6) als starre Dachschale ausgebildet ist und diese in Verdeckablageposition (A) von dem zweiten (7) und dem dritten Anschlag (12) unter Ausübung einer Scherkraft auf das Verdeckgestell fixierend beaufschlagt wird.

## Claims

1. Vehicle roof, comprising at least two roof segments (2) which, in the closed position, support a flexible roof skin (1) at least in some regions and can be shifted via at least two pairs of links (3, 4) in a positively controlled manner from a closed position (G) of the top into a fixed storage position (A) of the top and vice-versa, one pair of links (3) being drivable by motor in order to move all of the roof parts (1, 2, 3, 4), and, in the storage position (A) of the top, it being possible for the driven pair of links (3) to be supported by a first vehicle-body-side stop (5) on each side of the vehicle in order to fix all of the roof parts (1, 2, 3, 4) with defined distances being maintained at least between the at least two pairs of links (3, 4), **characterized in that** a second stop (7) supports the frontmost roof segment (6) or a roof segment (11) which is arranged before the rearmost roof segment and adjoining the former in storage position (A) of the top, **in that** a third stop (12) is provided which acts upon a roof segment (2) from above and/or laterally in the form of a buffer, and **in that** the pairs of links (3, 4, 9, 10) form a roof framework which comprises at least one four-bar linkage (14, 15) which, in the put-away state, lies in a secured position between at least two of the stops (5, 7, 12).

2. Vehicle roof according to Claim 1, **characterized in that** the second stop (7) is fixed on the vehicle body.

3. Vehicle roof according to Claim 2, **characterized in that** the second stop (7) is integrated into a rollover protection system.

4. Vehicle roof according to one of the preceding claims, **characterized in that** the second stop (7) is arranged either centrally or in pairs in each case in the region behind a pair of seat backs.

5. Vehicle roof according to Claim 3, **characterized in that** the second stop (7) engages under a roof lug (8).

6. Vehicle roof according to Claim 1, **characterized in that** the pairs of links (3, 4) are designed as a pair of roof links (9) and pair of supporting links (10), and the pair of supporting links (10) is driven indirectly via the pair of roof links (9).

7. Vehicle roof according to Claim 1, **characterized in that** the third stop (12) acts upon a vehicle roof region which is not provided with the flexible roof skin (1).

8. Vehicle roof according to Claim 1 or 7, **characterized in that** the third stop (12) is arranged on the inside or edge side of a top compartment (13) and/or rear lid.

9. Vehicle roof according to Claim 1, **characterized in that** the first stop (5), the second stop (7) and/or the third stop (12) can be adjusted at least vertically.

10. Vehicle roof according to Claim 1, **characterized in that** at least the frontmost roof segment (6) is designed as a rigid roof shell and, in the storage position (A) of the top, said roof shell is acted upon in a fixing manner by the second stop (7) and the third stop (12) with a shearing force being exerted on the top framework.

## Revendications

1. Toit de véhicule, constitué d'au moins deux segments de toit (2) supportant au moins en partie un revêtement de toit flexible (1) dans la position de fermeture, lesquels segments de toit peuvent être déplacés par le biais d'au moins deux paires de bras oscillants (3, 4) par commande forcée depuis une position fermée de la capote (G) dans une position de rangement fixe de la capote (A) et inversement, une paire de bras oscillants (3) pouvant être entraînée par moteur pour le déplacement de toutes les parties du toit (1, 2, 3, 4), et la paire de bras oscillants entraînée (3) pouvant être supportée dans la position de rangement de la capote (A) par une première butée du côté de la carrosserie (5) de chaque côté du véhicule pour fixer toutes les parties du toit (1, 2, 3, 4) en conservant des espacements définis au moins entre les au moins deux paires de bras oscillants (3, 4), **caractérisé en ce qu'**une deuxième butée (7) supporte le segment de toit (6) le plus en avant ou un segment de toit (11) situé avant le dernier segment de toit et se raccordant au premier, dans la position de rangement de la capote (A), **en ce qu'**une troisième butée (12) est prévue, laquelle sollicite, sous la forme d'un tampon, un segment de toit (2) depuis le haut et/ou latéralement, et **en ce que** les paires de bras oscillants (3, 4, 9, 10) forment une structure de toit incluant au moins un quadrilatère articulé (14, 15) qui s'insère dans l'état rangé entre au moins deux des butées (5, 7, 12) en position serrée.

2. Toit de véhicule selon la revendication 1, **caractérisé en ce que** la deuxième butée (7) est réalisée de manière fixée à la carrosserie.

3. Toit de véhicule selon la revendication 2, **caractérisé en ce que** la deuxième butée (7) est intégrée dans un système de cage de sécurité.

4. Toit de véhicule selon l'une quelconque des revendications précédentes, **caractérisé en ce que** la deuxième butée (7) est disposée soit centralement soit par paire à chaque fois dans la région derrière une paire de dossiers de siège.

5. Toit de véhicule selon la revendication 3, **caractérisé en ce que** la deuxième butée (7) vient en prise par le dessous avec un nez du toit (8).

6. Toit de véhicule selon la revendication 1, **caractérisé en ce que** les paires de bras oscillants (3, 4) sont réalisées sous forme de paire de bras oscillant de toit (9) et de paire de bras oscillant de support (10) et la paire de bras oscillant de support (10) est entraînée indirectement par le biais de la paire de bras oscillants de toit (9).

7. Toit de véhicule selon la revendication 1, **caractérisé en ce que** la troisième butée (12) sollicite une région du toit du véhicule non pourvue du revêtement de toit flexible (2).

8. Toit de véhicule selon la revendication 1 ou 7, **caractérisé en ce que** la troisième butée (12) est disposée sur le côté interne ou marginal d'un compartiment de capote (13) et/ou d'un capot arrière.

9. Toit de véhicule selon la revendication 1, **caractérisé en ce que** la première butée (5), la deuxième butée (7) et/ou la troisième butée (12) est/sont ajustables au moins en hauteur.

10. Toit de véhicule selon la revendication 1, **caractérisé en ce qu'**au moins le segment de toit (6) le plus en avant est réalisé sous forme de coque de toit rigide, et celle-ci est sollicitée en étant fixée dans la position de rangement de la capote (A) par la deuxième (7) et la troisième (12) butée, en exerçant une force de cisaillement sur la structure de capote.
